(19) Europäisches Patentamt
European Patent Office
Office européen des brevets

(11) **EP 2 570 448 A1**

(12) **EUROPÄISCHE PATENTANMELDUNG**

(43) Veröffentlichungstag:
20.03.2013 Patentblatt 2013/12

(51) Int Cl.:
*C08G 69/18* (2006.01)

(21) Anmeldenummer: 11181077.6

(22) Anmeldetag: **13.09.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **BASF SE**
**67056 Ludwigshafen (DE)**

(72) Erfinder: **Die Erfindernennung liegt noch nicht vor**

(54) **Verwendung von Polyethyleniminen in der Herstellung von Polyamiden**

(57) Die vorliegende Erfindung betrifft ein Verfahren zur Herstellung einer Zusammensetzung umfassend
(A) mindestens ein Lactam
(B) mindestens einen Katalysator
(C) einen Aktivator aus der Gruppe der Isocyanate, Säureanhydride, Säurehalogenide, deren Umsetzungsprodukte mit (A) und deren Mischungen
(D) mindestens ein Polyethylenimin.

Die Erfindung betrifft ebenfalls eine Zusammensetzung umfassend
(i) 0.01 bis 10 Gew.-%, bezogen auf die Summe der Komponenten (A) und (D) mindestens eines Polyethylenimins
(ii) 90 bis 99.99 Gew.-%, bezogen auf die Summe der Komponenten (A) und (D) mindestens eines Lactams (A) und/oder Polyamids erhältlich aus (A).

**Beschreibung**

Die vorliegende Erfindung betrifft ein Verfahren zur Herstellung einer Zusammensetzung umfassend

(A) mindestens ein Lactam
(B) mindestens einen Katalysator
(C) einen Aktivator aus der Gruppe der Isocyanate, Säureanhydride, Säurehalogenide, deren Umsetzungsprodukte mit (A) und deren Mischungen
(D) mindestens ein Polyethylenimin.

Die Erfindung betrifft ebenfalls eine Zusammensetzung umfassend

(i) 0.01 bis 10 Gew.-%, bezogen auf die Summe der Komponenten (A) und (D) mindestens eines Polyethylenimins
(ii) 90 bis 99.99 Gew.-%, bezogen auf die Summe der Komponenten (A) und (D) mindestens eines Lactams (A) und/oder Polyamids erhältlich aus (A).

Auch betrifft die Erfindung ein Verfahren zur Herstellung eines Formteils umfassend die Schritte

(a) das Mischen getrennt hergestellter Schmelzen

s1) enthaltend mindestens ein Lactam (A), einen Aktivator (C) und mindestens ein Polyethylenimin (D) und
s2) enthaltend mindestens ein Lactam (A) und mindestens einen Katalysator (B)

(b) Einspritzen der vereinigten Schmelzen s1) und s2) in eine heiße Form mit eingelegter textiler Struktur
(c) Auswerfen des resultierenden Formteils.

Des Weiteren betrifft die vorliegende Erfindung Formteile, die durch das beschriebene Verfahren. erhältlich sind.
Lactame, wie Caprolactam, können anionisch polymerisiert werden. Die Herstellung von Polyamid-Formkörpern ist dem Fachmann an sich bekannt.
Bei der anionischen Polymerisation wird zumeist ein Lactam mit einem Katalysator und einem Aktivator umgesetzt.
Aus Charlesby, A., Nature 1953, 171, 167 und Deeley, C., J. Appl. Phys. 1957, 28, 1124-1130 ist die Bestrahlung zur Quervernetzung von spritzgegossenen Thermoplasten wie Polyamiden bekannt. Bei dem beschriebenen Verfahren wird ein Additiv während der Polymerisation oder der Kompoundierung zum Polyamid gegeben. Im Anschluss an den Spritzguß wird dieses Additiv via eines externen Stimulus durch Strahlung angeregt, damit es mit der Polyamidkette reagiert, zum Beispiel um diese zu vernetzen.
Der vorliegenden Erfindung lag die Aufgabe zugrunde, ein Verfahren zur Herstellung von Polyamid, bereit zu stellen, das den Zugang zu hoch vernetzten Polyamiden eröffnet.
Es sollte zudem ein Verfahren zur Verfügung gestellt werden, das Polyamide mit einem hohen Quellgrad bereitstellt. Ein hoher Quellgrad dient dabei als Maß für einen hohen Vernetzungsgrad. Gleichzeitig sollten jedoch die optimierten Eigenschaften wie die Viskosität des im Stand der Technik beschriebenen Standardsystems aus Lactam und Aktivator/Katalysator möglichst wenig verändert werden.
Darüber hinaus sollte das Verfahren ein System zur Verfügung stellen, das sich zur Herstellung verstärkter und gefüllter Guss-Polyamidteile eignet. Insbesondere sollte es möglich sein, textilienförmige Verstärkungsstoffe in die Polyamid-Zusammensetzung einzuarbeiten.
Erfindungsgemäß wurde die Aufgabe durch Einsatz eines Polyethylenimins als weiterem Additiv gelöst, das bereits in geringen Mengen vernetzend wirkt.
Wie eingangs beschrieben wird erfindungsgemäß mindestens ein Lactam als Komponente (A) eingesetzt. Als Lactam eignet sich insbesondere Caprolactam, Piperidon, Pyrrolidon oder Lauryllactam. Es können auch Mischungen unterschiedlicher Lactame verwendet werden. Bevorzugt werden Caprolactam, Lauryllactam oder deren Mischungen verwendet. Besonders bevorzugt wird als Komponente (A) Caprolactam oder Lauryllactam eingesetzt.
In einer Ausführungsform ist es möglich, anstelle eines Lactams als Komponente (A) eine Mischung aus Lactam und Lacton einzusetzen. Als Lactone können beispielsweise Caprolacton oder Butyrolacton eingesetzt werden.
Sofern ein Lacton als Comonomer mitverwendet wird, wird es typischer Weise in Mengen von 0,01 bis 40 Gew.-% bezogen auf das Gesamtmonomer verwendet. Bevorzugt beträgt der Anteil an Lacton als Comonomer von 0,01 bis 30 Gew.-%, besonders bevorzugt von 0,01 bis 20 Gew.-%, bezogen auf das Gesamtmonomer.
In einer bevorzugten Ausführungsform der Erfindung werden ausschließlich Lactame als Komponente (A) verwendet.

In dem erfindungsgemäßen Verfahren wird ein Katalysator (B) verwendet. Unter einem Katalysator für die anionische Polymerisation wird im Rahmen der vorliegenden Erfindung eine Verbindung verstanden, welche die Bildung von Lactam-Anionen ermöglicht. Die Lactam-Anionen an sich können ebenfalls als Katalysator fungieren.

Derartige Katalysatoren sind beispielsweise aus Polyamide, Kunststoffhandbuch, 1998, Karl Hanser Verlag bekannt. Im Rahmen der vorliegenden Erfindung wird bevorzugt ein Katalysator (B) eingesetzt, der ausgewählt ist aus der Gruppe bestehend aus Alkalicaprolactamaten wie Natriumcaprolactamat, Kaliumcaprolactamat, Erdalkalicaprolactamate wie Bromid-Magnesiumcaprolactamat, Chlorid-Magnesiumcaprolactamat, Magnesium-bis-Caprolactamat, Alkalibasen, z.B. Natrium oder Natriumbasen wie Natriumhydrid, Natrium, Natriumhydroxid, Natriummethanolat, Natriumethanolat, Natriumpropanolat, Natriumbutanolat, z.B. Kalium oder Kaliumbasen wie Kaliumhydrid, Kalium, Kaliumhydroxid, Kaliummethanolat, Kaliumethanolat, Kaliumpropanolat, Kaliumbutanolat und deren Mischungen, bevorzugt bestehend aus Natriumcaprolactamat, Kaliumcaprolactamat, Bromid-Magnesiumcaprolactamat, Chloridmagnesiumcaprolactamat, Magnesiumbiscaprolactamat, Natriumhydrid, Natrium, Natriumhydroxid, Natriumethanolat, Natriummethanolat, Natriumpropanolat, Natriumbutanolat, Kaliumhydrid, Kalium, Kaliumhydroxid, Kaliummethanolat, Kaliumethanolat, Kaliumpropanolat, Kaliumbutanolat und deren Mischungen.

Besonders bevorzugt wird ein Katalysator (B) eingesetzt ausgewählt aus der Gruppe bestehend aus Natriumhydrid, Natrium und Natriumcaprolactamat und deren Mischungen; besonders bevorzugt ist Natriumcaprolactamat. Der Katalysator kann als Feststoff oder in Lösung eingesetzt werden. Der Katalysator wird bevorzugt als Feststoff eingesetzt. Der Katalysator wird bevorzugt in eine Caprolactam-Schmelze gegeben, in der er gelöst werden kann.

Das Molverhältnis von Lactam (A) zu Katalysator (B) kann in weiten Grenzen variiert werden, es beträgt in der Regel von 1 zu 1 bis 10000 zu 1, bevorzugt von 5 zu 1 bis 1000 zu 1, besonders bevorzugt von 1 zu 1 bis 500 zu 1.

Als Aktivator (C) für die anionische Polymerisation wird eine Verbindung ausgewählt aus der Gruppe der durch elektrophile Reste N-substituierten Lactame, der aliphatischen Diisocyanate, der aromatischen Diisocyanate, der Polyisocyanate, der aliphatischen Disäurehalogenide und aromatischen Disäurehalogenide. Es können auch Mischungen davon als Aktivator (C) eingesetzt werden.

Zu den durch elektrophile Reste N-substituierten Lactamen gehören zum Beispiel Acyllactame. Als Aktivator (C) können auch Vorstufen für solche aktivierten N-substituierten Lactame verstanden werden, welche zusammen mit dem Lactam (A) in situ ein aktiviertes, Lactam bilden.

Zu den aliphatische Diisocyanaten als Aktivator (C) eignen sich Verbindungen wie Butylendiisocyanat, Hexamethylendiisocyanat, Octamethylendiisocyanat, Decamethylendiisocyanat, Undodecamethylendiisocyanat, Dodecamethylendiisocyanat, 4,4'-Methylenbis (cyclohexylisocyanat), Isophorondiisocyanat, aromatische Diisocyanate, wie Toluyldiisocyanat, 4,4'-Methylenbis(phenyl)isocyanat oder Polyisocyanate (zum Beispiel Isocyanate von Hexamethylendiisocyanat; Basonat HI 100/BASF SE), Allophanate (zum Beispiel Ethylallophanat). Insbesondere können Mischungen der genannten Verbindung als Aktivator (C) eingesetzt werden.

Als aliphatische Disäurehalogenide eignen sich Verbindungen wie Butylendisäurechlorid, Butylendisäurebromid, Hexamethylendisäurechlorid, Hexamethylendisäurebromid, Octamethylendisäurechlorid, Octamethylendisäurebromid, Decamethylendisäurechlorid, Decamethylendisäurebromid, Dodecamethylendisäurechlorid, Dodecamethylendisäurebromid, 4,4'-Methylenbis (cyclohexylsäurechlorid), 4,4'-Methylenbis (cyclohexylsäurebromid), Isophorondisäurechlorid, Isophorondisäurebromid; als auch aromatische Disäurehalogenide, wie Toluymethylenldisäurechlorid, Toluylmethylendisäurechlorid, 4,4'-Methylenbis(phenyl)säurechlorid, 4,4'-Methylenbis(phenyl)säurebromid. Insbesondere können Mischungen der genannten Verbindung als Aktivator (C) eingesetzt werden. In einer bevorzugten Ausführungsform wird als Aktivator (C) mindestens eine Verbindung eingesetzt, die ausgewählt ist aus der Gruppe enthaltend Hexamethylendiisocyanat, Isophorondiisocyanat, Hexamethylendisäurebromid, Hexamethylendisäurechlorid oder deren Mischungen; besonders bevorzugt wird Hexamethylendiisocyanat eingesetzt. Der Aktivator (C) kann in Lösung eingesetzt werden. Insbesondere kann der Aktivator in Caprolactam gelöst werden. Geeignet als Aktivator (C) ist beispielsweise Brüggolen® C20, 80% Caprolactam-blockiertes 1,6-Hexamethylendiisocyanat in Caprolactam der Firma Brüggemann, DE.

Die Menge an Aktivator (C) definiert die Anzahl der wachsenden Ketten, da jedes Aktivatormolekül das Anfangsglied einer Polymerkette darstellt. Das Molverhältnis von Lactam (A) zu Aktivator (C) kann in weiten Grenzen variiert werden und beträgt in der Regel von 1 zu 1 bis 10000 zu 1, bevorzugt von 5 zu 1 bis 2000 zu 1, besonders bevorzugt 20 zu 1 bis 1000 zu 1.

Als Komponente (D) wird erfindungsgemäß ein Polyethylenimin oder eine Mischung von Polyethyleniminen eingesetzt. Es können erfindungsgemäß hyperverzweigte Polyethylenimine eingesetzt werden. Üblicherweise weist Polyethylenimin (D) ein mittleres Molekulargewicht (Gewichtsmittel) von 100 bis 3.000.000 g/mol, vorzugsweise von 500 bis 50.000 g/mol auf bestimmt mittels Lichtstreuung. Die Messung kann in Hexafluorisopropanol (HFIP) bei 40°C durchgeführt werden. Die verwendeten Polymere können eine Amino-Funktionalität primärer und/oder sekundärer Aminogruppen von 10 bis 70.000, insbesondere von 10 bis 10.000 pro Kette, bevorzugt von 20 bis 500 pro Kette aufweisen. Die Amino-Funktionalität kann aus der Verteilung der Aminogruppen, die aus NMR-Messungen ermittelt werden kann, bestimmt werden.

Unter Polyethylenimin werden im Sinne der vorliegenden Erfindung sowohl Homo- als auch Copolymerisate verstanden, die beispielsweise nach den Verfahren in Ullmann Electronic Release unter dem Stichwort "Aziridine" gemäß der WO 94/12560 erhältlich sind.

Die Homopolymerisate sind im Allgemeinen durch Polymerisation von Ethylenimin (Aziridin) in wässriger oder organischer Lösung in Gegenwart von säureabspaltenden Verbindungen, Säuren oder Lewis-Säuren erhältlich. Derartige Homopolymerisate sind verzweigte Polymere, die in der Regel primäre, sekundäre und tertiäre Aminogruppen im Verhältnis von ca. 30% zu 40% zu 30% enthalten. Diese Verteilung der Aminogruppen kann im Allgemeinen mittels 13C-NMR-Spektroskopie bestimmt werden. Die Verteilung beträgt vorzugsweise von 1 zu 0,8 zu 0,5 bis 1 zu 1,3 zu 0,8.

Als Comonomere werden vorzugsweise Verbindungen eingesetzt, welche mindestens zwei Aminofunktionen aufweisen. Als geeignete Comonomere seien beispielsweise Alkylendiamine mit 2 bis 10 Kohlenstoffatomen im Alkylenrest genannt, wobei Ethylendiamin und Propylendiamin bevorzugt sind. Weiterhin geeignete Comonomere sind Triamine wie Diethylentriamin, Triethylentetramin, Tetraethylenpentamin, Dipropylentriamin, Tripropylentetramin, Diheamethylentriamin, Aminopropylethylendiamin und Bisaminopropylethylendiamin.

Darüber hinaus eigenen sich vernetzte Polyethylenimine, die durch Reaktion von Polyethyleniminen mit bi- oder polyfunktionellen Vernetzern erhältlich sind, welche als funktionelle Gruppe mindestens eine Halogenhydrin-, Glycidyl-, Aziridn-, Isocyanateinheit oder ein Halogenatom aufweisen. Als Beispiele für derartige Vernetzer seinen Epichlorhydrin oder Bischlorhydrinether von Polyalkylenglykolen mit 2 bis 100 Ethylenoxid-und/oder Propylenoxid-Einheiten sowie die in der DE-A 19 93 17 20 und US 4 144 123 aufgeführten Verbindungen genannt. Verfahren zur Herstellung von vernetzten Polyethyleniminen sind unter anderem aus den oben genannten Schriften sowie EP-A 895 521 und EP-A 25 515 bekannt.

Weiterhin sind gepfropfte Polyethylenimine geeignet, wobei als Pfropfmittel sämtliche Verbindungen eingesetzt werden können, die mit den Amino- beziehungsweise I-mingruppen der Polyethylenimine reagieren können. Geeignete Pfropfmittel und Verfahren zur Herstellung von gepfropften Polyethyleniminen sind beispielsweise der EP-A 675 914 zu entnehmen.

Ebenso geeignete Polyethylenimine im Sinne der der Erfindung sind amidierte Polymerisate, die üblicherweise durch Umsetzung von Polyethyleniminen mit Carbonsäuren deren Estern oder Anhydriden, Carbonsäureamiden oder Carbonsäurehalogeniden erhältlich sind. Je nach Anteil der amidierten Stickstoffatome in der Polyethyleniminkette in der Polyethyleniminkette können die amidierten Polymerisate nachträglich mit den genannten Vernetzern vernetzt werden. Vorzugsweise werden hierbei bei zu 30% der Aminofunktionen amidiert, damit für eine anschließende Vernetzungsreaktion noch genügend primäre und/oder sekundäre Stickstoffatome zur Verfügung stehen. Außerdem eignen sich alkoxylierte Polyethylenimine, die beispielsweise durch Umsetzung von Polyethyleniminen mit Ethylenoxid und/oder Propylenoxid erhältlich sind. Derartige alkoxylierte Polymerisate sind anschließend vernetzbar.

Als weitere geeignete erfindungsgemäße Polyethylenimine seinen hydroxygruppenhaltige Polyethylenimine und amphotere Polyethylenimine (Einbau von anionischen Gruppen) genannte sowie lipophile Polyethylenimine, die in der Regel durch Einbau langkettiger Kohlenwasserstoffreste in die Polymerkette erhalten werden. Verfahren zur Herstellung derartiger Polyethylenimine sind dem Fachmann bekannt.

Geeignete Polyethylenimine sind beispielsweise unter den Handelsnamen Lupasol® (Hersteller BASF SE, Ludwigshafen) erhältlich.

In einer Ausführungsform der Erfindung wird das Stoffmengen-Verhältnis von reaktiven Gruppen des Aktivators (C) zu NH und/oder $NH_2$-Gruppen des Polyethylenimin (D) von 1 zu 2 bis 10 zu 1 gewählt.

Hierbei wird die Stoffmenge der NH und/oder $NH_2$-Gruppen des Polyethylenimins aus der mittels Lichtstreuungsversuche ermittelten Molmasse des Polyethylenimins und der aus 13C-NMR Messungen bestimmten Verteilung der verschiedenen Aminogruppen bestimmt. Dabei wird die Annahme getroffen eine durchschnittliche Amino-/Iminiogruppen-Einheit eine Molmasse von 44 g/mol hat. Aus den so gegebenen Daten lassen sich die eingewogenen Massen in eine Stoffmenge an NH und/oder $NH_2$-Gruppen umrechnen.

Die Stoffmenge der NCO-Gruppen des Aktivators lässt sich wiederum aus der Konzentration des Aktivators zum Beispiel CL-blockiertes Hexamethylendiisocyanat (HDI) in zum Beispiel Caprolactam über die Stoffmenge des Aktivators errechnen.

Des Weiteren betrifft die Erfindung die Zusammensetzung, die mittels des oben genannten Verfahrens erhältlich ist. Insbesondere betrifft die vorliegende Erfindung eine Zusammensetzung umfassend von 0.01 bis 10 Gew.-%, bevorzugt von 0.3 bis 1 Gew.-% bezogen auf die Summe der Komponenten (A) und (D) mindestens eines Polyethylenimins und von 90 bis 99.99 Gew.-%, bevorzugt 99.7 bis 99 Gew.% bezogen auf die Summe der Komponenten (A) und (D) mindestens eines Lactams.

Neben den Komponenten (A) bis (D) kann die Zusammensetzung noch weitere Zusatzstoffe (E) enthalten. Die weiteren Zusatzstoffe werden zur Einstellung der Eigenschaften des aus dem Lactam hergestellten Polyamids zugegeben. Übliche Zusatzstoffe sind zum Beispiel Weichmacher, Schlagzähmodifizierer, Farbstoffe, Entformungsmittel, Viskositätsverbesserer oder Flammschutzmittel.

Des Weiteren bezieht sich die vorliegende Erfindung auf die Zusammensetzung erhältlich aus dem beschriebenen Verfahren.

Insbesondere bezieht sich die Erfindung auf eine Zusammensetzung umfassend

(i) 0.01 bis 10 Gew.-%, bezogen auf die Summe der Komponenten (A) und (D) mindestens eines Polyethylenimins
(ii) 90 bis 99.99 Gew.-%, bezogen auf die Summe der Komponenten (A) und (D) mindestens eines Lactams und/oder Polyamids erhältlich aus (A).

In einer weiteren Ausführungsform der Erfindung kann die Zusammensetzung, die die Komponenten A) bis D) umfassen kann und gegebenenfalls E) auf eine zur Polymerisation des Lactams geeignete Temperatur erwärmt werden. Erwärmung der Zusammensetzung auf eine zur Polymerisation des Lactams geeignete Temperatur führt in der Regel zu einem Duroplast. Insbesondere kann die Zusammensetzung umfassend die Komponenten A) bis D) und gegebenenfalls E) auf 40 bis 240°C bevorzugt 100 bis 170°C erwärmt werden. Ausdrücklich kann die Zusammensetzung auch ohne textile Struktur erwärmt werden.

Wird die Zusammensetzung ohne textile Struktur erwärmt, kann das so erhältliche Polyamid einen Quellgrad von 1 bis 50, insbesondere von 1 bis 40, bevorzugt von 1 bis 35 zum Beispiel von 1 bis 31, gemessen in Hexafluoroisopropanol aufweisen. Geeignete Messbedingungen sind dem Beispielteil zu entnehmen.

Die Erfindung betrifft auch Verfahren zur Herstellung eines Formteils umfassend die Schritte

(a) das Mischen getrennt hergestellter Schmelzen

s1) enthaltend mindestens ein Lactam (A), einen Aktivator (C) und mindestens ein Polyethylenimin (D) und
s2) enthaltend mindestens ein Lactam (A) und mindestens einen Katalysator (B)
(b) Einspritzen der vereinigten Schmelzen s1) und s2) in eine heiße Form mit eingelegter textiler Struktur
(c) Auswerfen des resultierenden Formteils aus der Form.

Mischvorgänge können in einem statischen oder dynamischen Mischer durchgeführt werden.

Die erfindungsgemäße Zusammensetzung zeichnet dadurch aus, dass die Art der Formen, in denen sie eingesetzt werden kann, nicht beschränkt ist. Insbesondere Formen zur Herstellung dünnwandiger Formkörper, in denen die Schmelzen lange Fließstrecken zurücklegen müssen sind mittels des beschriebenen Verfahrens besonders gut herstellbar.

Eventuell können beim Vermischen der Schmelzen weitere Zusätze wie Entformungsmittel oder Viskositätsverbesserer zugefügt werden.

Die Verweilzeit des Formteils in der Form hängt von den Gegebenheiten des Einzelfalls ab, zum Beispiel der Spritztemperatur und der Komplexität des Formteils. Typische Verweilzeiten können im Sekunden- bis zweistelligen Minutenbereich liegen. Zum Beispiel können Verweilzeiten im Bereich von 30 sec bis 10 min liegen. Nach der Verweilzeit wird das Formteil aus der Form ausgeworfen.

Die Temperatur der Form hängt von den Gegebenheiten des Einzelfalls ab, insbesondere von den eingesetzten Komponenten und der Komplexität des Formteils. Unter einer heißen Form wird üblicher Weise eine Form mit einer Temperatur von 90 bis 250 °C insbesondere von 100 bis 200 °C verstanden.

Eine textile Struktur im Sinne der Erfindung ist eine Verknüpfung von Fasern oder Faserbündeln sein. Sie kann ein- oder mehrlagig sein. Sie kann zum Beispiel ein Gewebe, Gewirke, Geflechte, Gestricke, Gelege oder Vlies sein. Als textile Struktur im Rahmen der vorliegenden Erfindung werden Gewebe aus mindestens einer Lage, bevorzugt mehr als einer Lage, ein- oder mehrlagige Gestricke, ein- oder mehrlagige Gewirke, ein- oder mehrlagige Geflechte, Gelege, mindestens eine Lage, bevorzugt mehrere Lagen, aus parallel ausgerichteten Fasern, Faserbündeln, Garnen, Zwirnen oder Seilen, wobei die einzelnen Lagen der parallel ausgerichteten Fasern oder Faserbündeln von Garnen, Zwirnen oder Seilen zueinander gedreht sein können, oder Vliese verstanden. Bevorzugt liegen die textilen Strukturen als Gewebe oder in Form von Lagen parallel ausgerichteter Fasern oder Faserbündeln wie Garne, Zwirne oder Seile vor.

Wenn bei Gelegen die Lagen parallel ausgerichteter Fasern oder Faserbündeln wie Garne, Zwirne oder Seile gedreht zueinander eingesetzt werden, sind die einzelnen Lagen besonders bevorzugt jeweils um einen Winkel von 90° zueinander gedreht (bidirektionaler Aufbau). Bei Einsatz von drei Lagen oder eines Vielfachen von drei Lagen ist es auch möglich, die einzelnen Lagen um einen Winkel von 60° zueinander gedreht anzuordnen und bei vier Lagen oder Vielfachen von vier Lagen um einen Winkel von 45° zueinander gedreht. Weiterhin ist es auch möglich, mehr als eine Lage an Fasern oder Faserbündeln mit gleicher Ausrichtung vorzusehen. Hierbei können ebenfalls Lagen zueinander verdreht sein, wobei die Anzahl an Lagen mit Fasern oder Faserbündeln gleicher Ausrichtung in jeder der Ausrichtungen der Fasern oder Faserbündeln unterschiedlich sein kann, beispielsweise vier Lagen in einer ersten Richtung und eine Lage in einer dazu zum Beispiel um 90° gedrehten Richtung (bidirektionaler Aufbau mit Vorzugsrichtung). Weiterhin ist auch ein quasiisotroper Aufbau bekannt, bei dem die Fasern einer zweiten Lage um 90° gedreht zu Fasern oder Faserbündeln einer ersten Lage angeordnet sind und weiterhin Fasern oder Faserbündeln einer dritten Lage um 45° gedreht zu den Fasern oder Faserbündeln der zweiten Lage.

Besonders bevorzugt zur Herstellung der faserverstärkten Formteile werden textile Strukturen in von 2 bis 10 Lagen, insbesondere in von 2 bis 6 Lagen eingesetzt.

Die eingesetzten textilen Strukturen enthalten als Fasern vorzugsweise solche aus anorganischen Mineralien wie Kohlenstoff, beispielsweise als Niedermodulcarbonfasern oder Hochmodulcarbonfasern, silikatische oder nicht silikatische Gläser der verschiedensten Art, Bor, Siliciumcarbid, Kaliumtitanat, Metalle, Metalllegierungen, Metalloxide, Metallnitride, Metallcarbide oder Silikate, sowie organische Materialien wie natürliche und synthetische Polymere, beispielsweise Polyacrylnitrile, Polyester, ultrahochgereckte Polyolefinfasern, Polyamide, Polyimide, Aramide, Flüssigkristallpolymere, Polyphenylensulfide, Polyetherketone, Polyetheretherketone, Polyetherimide, Baumwolle, Cellulose oder andere Naturfasern, beispielsweise Flachs, Sisal, Kenaf, Hanf oder Abaca. Bevorzugt sind hochschmelzende Materialien, beispielsweise Gläser, Kohlenstoff, Aramide, Kaliumtitanat, Flüssigkristallpolymere, Polyphenylensulfide, Polyetherketone, Polyetheretherketone und Polyetherimide, besonders bevorzugt sind Glas-, Kohlenstoff-, Aramid-, Stahl-, Kaliumtitanat-, Keramik- und/oder sonstige hinreichend temperaturbeständige polymere Fasern oder Fäden.

Selbstverständlich können die textilen Strukturen auch aus Fasern unterschiedlichen Materials aufgebaut sein.

Beispiele

Die Erfindung wird anhand von nachstehenden Beispielen näher erläutert, ohne sie darauf einzuschränken.

Messung der Molmasse (GPC):

Die GPC-Messungen wurden mit Pumpen und Detektoren der Firma Agilent durchgeführt: Als Säulen wurden HFIP-LG Guard, HTS PL HFIP Gel und PL HFIPgel in einem Ofen (40 °C) verwendet. Das Elutionsmittel war Hexafluorisopropanol mit 0.05% Trifluoressigsäure-Kaliumsalz und die Durchflussgeschwindigkeit betrug 1 ml/min. Die Kalibration erfolgte mit eng verteilten PMM-Standards der Firma PSS.

Der unlösliche Gelanteil wurde bestimmt, um festzustellen, ob das Molekulargewicht ausreichend groß ist und eine Vernetzung vorliegt. Dazu wurden 1,5 mg Polymer in 1 ml Hexafluorisopropanol angesetzt und für mindestens 4 h bei 45°C gerührt. Unlösliche Gelanteile wurden vor einer GPC-Messung über einen Einmalfilter Millipore Millex FG (0,2 $\mu$m) abfiltriert. Nach der Filtration wurden 100 $\mu$L der Probenlösung in das GPC-Gerät injiziert. Der unlösliche Gelanteil errechnete sich aus einem bekannten Referenzfaktor für ein anionisches Polyamid in Hexafluorisopropanol, der das Verhältnis von Signalfläche zu Einwaage repräsentiert.

Quellungstest von vernetztem Polyamid am Beispiel von Polyamid 6

Der Quellungstest von vernetztem Polyamid6 wurde durch den Gleichgewichts-Quellungsgrad Q charakterisiert. Q ist definiert als der Quotient des gequollenen Endvolumens $V_f$ in Hexafluoroisopropanol (HFIP) und dem kollabierten Anfangsvolumen $V_i$ und kann gemäß Formel I auch als der Quotient der Gewichtsanteile des Netzwerks im Anfangs- und Endgel, $m_i$ beziehungsweise $m_f$ angegeben werden, wobei $\rho_{HFIP}$ (= 1,452 g/ml) und $\rho_{PA6}$ (= 1,452 g/ml) für die Dichte des Lösungsmittel beziehungsweise des durch anionische Polymerisation erhaltenen Polyamid 6 stehen.

$$Q = \frac{V_f}{V_i} = \frac{\frac{m_{hfip}}{d_{hfip}} + \frac{m_f}{d_{PA6}}}{\frac{m_f}{d_{PA6}}} = 1 + \frac{m_{hfip}}{m_f} \times \frac{d_{PA6}}{d_{hfip}} = 1 + \left(\frac{m_f - m_i}{m_f}\right) \times \frac{d_{PA6}}{d_{hfip}} = 1 + \left(1 - \frac{m_i}{m_f}\right) \times \frac{d_{PA6}}{d_{hfip}}$$

Ein lineares PA6 ohne Vernetzung ist vollständig löslich und hat somit einen $V_f$-Wert von 0 und damit Q = 0. Ein vollständig vernetztes Polyamid 6 (PA6) wird sich überhaupt nicht lösen, damit ist $V_f = V_i$ und Q = 1. Für teilweise vernetzte Polyamid 6 (PA6) können beliebige Werte erreicht werden, wobei die Vernetzung umso größer ist, je kleiner der Wert von Q ist und je näher er bei 1 liegt. Der Quelltest wird bei 25 °C durchgeführt.

Viskositäten

Die Viskositäten $\eta$ wurden mit einem Rotationsviskosimeter Physica MCR301 bei Temperaturen von 80°C, 100°C und 150°C bestimmt. Das Polyethylenimin wurde dazu in geschmolzenem Caprolactam (Schmelzpunkt 70°C) gelöst.

Kinetik

Über einen Zeitraum von 15 min wurde die Entwicklung der internen Temperatur mit Hilfe eines Thermofühlers gemessen. Daraus wurde ein Temperatur-Zeit-Diagramm erstellt, in dem für eine standardisierte anionische Polymerisation (ohne weitere Additive) typischerweise zwei exotherme Peaks auftreten: ein Peak für die Polymerisation und ein Peak für die Kristallisation. Die Zeit ($t_{max}$) bis zum Erreichen der maximalen Temperatur ($T_{max}$) des Polymerisationspeaks diente jeweils als Vergleichspunkt zur Bewertung der Reaktionsgeschwindigkeiten von einer standardisierten anionischen Polymerisation und einer Polymerisation in Anwesenheit der Additive.

Anionische Polymerisationen im Kalorimeter (ohne Fasern):

Alle Polymerisationsreaktionen wurden bei 140°C unter Rühren in trockener Stickstoffatmosphäre in einem 50 ml Glaskalorimeterreaktor, der mit einem fettfreien Teflonstopfen verschlossen und mit einem Thermoelement versehen war, durchgeführt. Die Ergebnisse sind in Tabelle 1 aufgeführt. Das folgende Beispiel 1 erläutert die Versuchsdurchführung in Detail.

Reaction Injection Molding (RIM)-Verfahren

Beim Reaction Injection Molding-Verfahren wurden zwei oder mehr Komponenten in einem Mischer intensiv vermischt und unmittelbar darauf als reaktive Masse in ein formgebendes Werkzeug gespritzt. Die Polymerisation fand in der Form statt. Ein weiterer Vorteil beim RIM-Verfahren sind die niedrigen Viskositäten der verarbeiteten Schmelzen. Dadurch können größere Fließwege und komplexere Formteile erreicht werden. Siehe hierzu auch K. Stoeckhert (Hrsg.): Kunststoff-Lexikon, München, Wien, Hanser 1981.

Einsatzstoffe

Aktivators Brüggolen® C20 (80% Caprolactam-blockiertes 1,6-Hexamethylendiisocyanat in Caprolactam, Brüggemann KG, Heilbronn)

Katalysators Brüggolen® C10 (18% Natriumcaprolactam in Caprolactam, Brüggemann KG, Heilbronn)

Glasfilamentgewebe: Flächengewicht 280,0 $g/m^2$ ± 5% bestimmt nach DIN EN 12127, Kettgarn EC9-68x3 t0, Schußgarn EC9-204, Fadendichte, Kette 7,0 Fd / cm ± 5%, Schuß 6,5 Fd / cm ± 5% bestimmt nach DIN EN 1049, Feuchtigkeitsgehalt kleiner 0,1% ± 1% .bestimmt nach DIN EN 3616, Dicke (Richtwert trocken), 0,35 mm ± 5% bestimmt nach DIN ISO 4603/E.

Polyethylenimin

Mw = 25000 g/mol, bestimmt aus GPC mit Lichtstreuung in Hexafluorisopropanol (HFIP) bei 40°C, Verhältnis primäre : sekundäre : tertiäre Aminogruppe = 1 : 1.20 : 0.76; 1 g des verwendeten Polyethylenimins enthielten 16,87 mmol NH und/oder $NH_2$-Gruppen)

Vergleichsbeispiel 1:

9,400 g Caprolactam und 0.200 g des Aktivators Brüggolen® C20 (80% Caprolactam-blockiertes 1,6-Hexamethylendiisocyanat in Caprolactam, Brüggemann KG, Heilbronn) wurden in dem Reaktor bei 140°C gelöst. Anschliesend wurden 0,400 g des Katalysators Brüggolen C10 (18% Natriumcaprolactam in Caprolactam, Brüggemann KG, Heilbronn) als Feststoff bei RT in die schmelzflüssige Mischung zugegeben Über eine Zeit von 15 min wurde nun die Entwicklung der internen Temperatur mit Hilfe eines Thermofühlers gemessen. Anschließend wurde die anionische Polymerisation durch Abkühlen des Reaktors in Wasser (10°C) gequencht.

Quelltest:

1 g des erhaltenen Polymers wurde unter Rühren in 50 mL Hexafluorisopropanol (HFIP) bei Raumtemperatur gegossen. Nach 5 Minuten wurde die Lösung transparent und homogen. Nach Filtration wurde das Polymer durch Entfernung des Lösungsmittels bis zur Gewichtskonstanz vollständig aus dem Filtrat zurück gewonnen, woraus hervorgeht, dass das lineare PA6 vollständig in HFIP löslich war. Q = 0

Vergleichsbeispiel 2:

Der Polymerisationsansatz aus Vergleichsbeispiel 1 wurde bei 155°C wiederholt. Das resultierende Polymer war ebenfalls kaum quervernetzt.

Die Versuchsergebnisse zeigen, dass der erfindungsgemäße Zusatz von Polyethyleniminen zur aktivierten anionischen Polymerisation Polyamide mit stärkerer Vernetzung liefert.

Beispiel 3:

9,370 g Caprolactam und 0,031 g Polyethylenimin wurden in dem Reaktor bei 140°C gelöst. Anschließend wurden 0.200 g des Aktivators Brüggolen® C20 (80% Caprolactam-blockiertes 1,6-Hexamethylendiisocyanat in Caprolactam, Brüggemann KG, Heilbronn) als Feststoff bei RT in die schmelzflüssige Mischung zugegeben. Die Mischung wurde für 15 min bei 140°C gerührt. Daraufhin wurden 0,400 g des Katalysators Brüggolen® C10 (18% Natriumcaprolactam in Caprolactam, Brüggemann KG, Heilbronn) als Feststoff bei RT in die schmelzflüssige Mischung zugefügt. Über eine Zeit von 15 min wurde die Entwicklung der internen Temperatur mit Hilfe eines Thermofühlers gemessen. Anschließend wurde die anionische Polymerisation durch Abkühlen des Reaktors in Wasser (10°C) gequencht. Der entstandene Polymerblend ist stark vernetzt, die abfiltrierten Gelanteile betragen 89%.

1 g des erhaltenen Polymers wurde unter Rühren in 50 ml Hexafluorisopropanol (HFIP) bei Raumtemperatur gegossen. Nach 10 h wurde eine gel-artige Struktur erhalten. Nach Filtration wurde das Polymer auf dem Filter zurück gewonnen, wohingegen in dem Filtrat nach Eindampfen kein Polymer nachgewiesen wurde, woraus hervorgeht, dass das PA6 in HFIP unlöslich und vernetzt war. Der Quellungsgrad (Degree of swelling) des erhaltenen Polyamide betrug 29.

Beispiele 4 und 5:

Beispiel 3 wurde wiederholt mit dem Unterschied, dass jeweils 0,57% und 0,94% Lupasol WF und 0,400 g beziehungsweise 0,600 g des Aktivators Brüggolen® C20 eingesetzt wurden.

Tabelle 1:

| Beispiel | Vergl. 1 | 3 | 4 | 5 |
|---|---|---|---|---|
| Lactam (Gew.-%) | 94 | 93,7 | 91,5 | 89,0 |
| Polyethylenimin (Gew.-%) | - | 0,31 | 0,57 | 0,94 |
| Katalysator C10 (Gew.-%) | 4 | 4 | 4 | 4 |
| Aktivator C20 (Gew.-%) | 2 | 2 | 4 | 6 |
| Stoffmenge NH und/oder NH2-Gruppen (mmol) | - | 0,523 | 0,962 | 1,586 |
| Stoffmenge NCO-Gruppen (mmol) | 0,81 | 0,81 | 1,62 | 2,43 |
| VerhältnisNCO/ (NH und/oder NH2) | - | 1,55 | 1,68 | 1,53 |
| Differenz NCO-(NH und/oder NH2) (mmol) | - | 0,287 | 0,658 | 0,844 |
| Überschuß NCO (Gew.-%) | 2 | 0,71 | 1,52 | 2,08 |
| Tmax (°C) | 186,7 | 182,0 | 185,3 | 185,7 |
| tmax (s) | 78 | 96 | 76 | 78 |
| η [mPa·s] 80°C | 8,8 | 9,2 | 13,6 | 15,0 |
| η [mPa·s] 100°C | 4,9 | 5,1 | 6,8 | 8,2 |
| η [mPa·s] 150°C | 2,0 | 2,2 | 3,1 | 4,0 |
| abfiltrierte Gelanteile (%) | 10 | 89 | 100 | 95 |
| Quellungsgrad Q | 0 | 29 | 14 | 4 |

Die Versuchsergebnisse zeigen, dass der erfindungsgemäße Zusatz von Polyethyleniminen zur aktivierten anionischen Polymerisation Polyamide mit stärkerer Vernetzung liefert.

Herstellung von Glasfaser-verstärkten Platten:

Die Herstellung der Glasfaser-verstärkten Polyamidformkörper erfolgte im RIM-Verfahren in einem beheizbaren Formträger. Dazu wurden die verschiedenen Komponenten in einer Gießmaschine der Firma Tartler, Michelstadt angesetzt. Die Gießanlage bestand aus drei Behältern mit einem jeweiligen Volumen von 20 Litern, die jeweils mit einer Pumpe mit einer Förderleistung von 40-400 ccm/min ausgestattet waren. Nach der RIM-Technologie wurden in einem dynamischen Mischer (Mischtemperatur: 122°C) mit 6000 U/min die verschiedenen Komponenten im Verhältnis 1:1 gemischt. Die Mischung wurde in eine geschlossene, auf 155°C beheizte und mit 8 Lagen Fasern vom Typ Interglas 92125 (Schlichte FK801) gefüllte Form eingetragen. Diese Form hatte eine Abmessung von 340x340x4 mm und ein Volumen von 360 cm3. Nach 10 min Reaktion in der Form wurde das fertige Formteil entnommen. Die Ergebnisse sind in Tabelle 2 aufgeführt. Die folgenden Beispiele erläutern die Versuchsdurchführung in Detail.

Tabelle 2 :

| Beispiel | Vergl. 1 | 6 | 7 |
|---|---|---|---|
| Lactam (Gew.-%) | 94 | 91,5 | 89 |
| Polyethylenimin (Gew.-%) | - | 0,5 | 1,0 |
| Katalysator C10 (Gew.-%) | 4 | 4 | 4 |
| Aktivator C20 (Gew.-%) | 2 | 4 | 6 |
| Stoffmenge NH und/oder NH2-Gruppen (mol) | - | 0,844 | 1,687 |
| Stoffmenge NCO-Gruppen (mol) | 0,81 | 1,62 | 2,43 |
| Verhältnis NCO/ (NH und/oder NH2) | - | 1,92 | 1,44 |
| Differenz NCO-(NH und/oder NH2) (mol) | - | 0,776 | 0,743 |
| Überschuß NCO (Gew.-%) | 2 | 1,92 | 1,83 |
| abfiltrierte Gelanteile (%) | 29 | 83 | 91 |

Vergleichsbeispiel 6: Herstellung eines Polyamidformkörpers

Zusammensetzung des A-Behälters:
200 g Brüggolen® C20 (2 Gew-%)
4780 g Caprolactam (47,8 Gew-%)
20 g Calciumstearat (0.2 Gew-%)

Zusammensetzung des B-Behälters:
400 g Brüggolen® C10 (4 Gew-%)
4600 g Caprolactam (46 Gew-%)

Der Aktivator Brüggolen® C20 (80% Caprolactam-blockiertes 1,6-Hexamethylendiisocyanat in Caprolactam, Brüggemann KG, Heilbronn) und der Katalysators Brüggolen® C10 (18% Natriumcaprolactam in Caprolactam, Brüggemann KG, Heilbronn) wurden als Feststoffe den frischen Caprolactamschmelzen bei 112°C in den Behältern A und B unter Rühren und unter N2-Atmosphäre zugefügt. Dem A-Behälter wird außerdem noch 0.2% Calciumstearat als internes Entformungsmittel beigegeben. Anschließend wurden die beiden Mischungen im Verhältnis 1:1 in den geschlossenen, auf 155°C beheizten und mit Fasergewebe vom Typ Interglas 92125 (Schlichte FK800) gefüllten Formträger einspritzt. Nach 10 min bei 155°C in der Form wurde das fertige Formteil ohne Entformungsprobleme entnommen. Es wurde eine Platte mit glatter Oberfläche und ohne Verfärbungen erhalten.

Beispiel 7:

Zusammensetzung des A-Behälters:
400 g Brüggolen® C20 (4 Gew-%)
4555 g Caprolactam (45,55 Gew-%)
20 g Calciumstearat (0.2 Gew-%)
25 g Lupasol® WF (0,5 Gew-%)

Zusammensetzung des B-Behälters:
400 g Brüggolen® C10 (4 Gew-%)
4600 g Caprolactam (46 Gew-%)

25 g Lupasol® WF wurden in Behälter A in 4755 g Caprolactam unter Rühren innerhalb von 5 min bei 140°C unter $N_2$-Atmosphäre gelöst. Anschließend wurden 400 g des Aktivators Brüggolen® C20 (80% Caprolactam-blockiertes 1,6-Hexamethylendiisocyanat in Caprolactam, Brüggemann KG, Heilbronn) als Feststoff bei 20°C zugegeben. Parallel dazu wurden 400 g des Katalysators Brüggolen® C10 (18% Natriumcaprolactam in Caprolactam, Brüggemann KG, Heilbronn) als Feststoff bei 20°C auf 4600 g Caprolactamschmelze in Behälter B zugegeben. Anschließend wurden die beiden Mischungen im Verhältnis 1:1 in den geschlossenen, auf 155°C beheizten und mit Fasergewebe vom Typ Interglas 92125 (Schlichte FK800) gefüllten Formträger einspritzt. Nach 10 min bei 150°C in der Form wurde das fertige Formteil ohne Entformungsprobleme entnommen. Es wurde eine Platte mit glatter Oberfläche und ohne Verfärbungen erhalten. Die entstandene Polymermatrix ist stark vernetzt, die abfiltrierten Gelanteile betragen 83%.

Beispiel 8:

Zusammensetzung des A-Behälters:
600 g Brüggolen® C20 (6 Gew-%)
4330 g Caprolactam (43,30 Gew-%)
20 g Calciumstearat (0.2 Gew-%)
50 g Lupasol® WF (1,0 Gew-%)

Zusammensetzung des B-Behälters:
400 g Brüggolen® C10 (4 Gew-%)
4600 g Caprolactam (46 Gew-%)

Beispiel 7 wurde wiederholt mit dem Unterschied, dass 1,0% Lupasol® WF und 6% des Aktivators Brüggolen® C20 zugegeben wurden.
Die Versuchsergebnisse zeigen, dass der erfindungsgemäße Zusatz von Polyethyleniminen zur aktivierten anionischen Polymerisation Polyamide mit stärkerer Vernetzung liefert. Es werden nur noch die Anteile mit einer geringen Molmasse gelöst.

**Patentansprüche**

1.  Verfahren zur Herstellung einer Zusammensetzung umfassend

    (A) mindestens ein Lactam
    (B) mindestens einen Katalysator
    (C) einen Aktivator aus der Gruppe der Isocyanate, Säureanhydride, Säurehalogenide, deren Umsetzungsprodukte mit (A) und deren Mischungen
    (D) mindestens ein Polyethylenimin.

**2.** Verfahren nach Anspruch 1 wobei das Stoffmengen-Verhältnis von reaktiven Gruppen des Aktivators (C) zu NH und/oder $NH_2$-Gruppen von Polyethylenimin (D) von 1 zu 2 bis 10 zu 1 beträgt.

**3.** Verfahren nach Anspruch 1 oder 2 wobei Polyethylenimin (D) ein mittels Lichtstreuung bestimmtes gewichtsgemitteltes Molekulargewicht von 100 bis 3.000.000 g/mol aufweist.

**4.** Verfahren nach mindestens einem der Ansprüche 1 bis 3 wobei Polyethylenimin (D) eine primäre und/oder sekundäre Aminofunktionalität von 10 bis 70.000 pro Kette aufweist.

**5.** Verfahren nach mindestens einem der Ansprüche 1 bis 4 wobei die Komponenten (A) bis (D) einer Temperatur von 40 bis 240°C ausgesetzt werden.

**6.** Zusammensetzung umfassend

(i) 0.01 bis 10 Gew.-%, bezogen auf die Summe der Komponenten (A) und (D) mindestens eines Polyethylenimins (D)
(ii) 90 bis 99.99 Gew.-%, bezogen auf die Summe der Komponenten (A) und (D) mindestens eines Lactams (A) und/oder Polyamids erhältlich aus dem Lactam (A).

**7.** Zusammensetzung erhältlich nach Anspruch 5 wobei die Zusammensetzung einen Quellgrad von 1 bis 50, gemessen in Hexafluoroisopropanol, hat.

**8.** Verfahren zur Herstellung eines Formteils umfassend

(a) das Mischen getrennt hergestellter Schmelzen

s1) enthaltend mindestens ein Lactam (A), einen Aktivator (C) und mindestens ein Polyethylenimin (D) und
s2) enthaltend mindestens ein Lactam (A) und mindestens einen Katalysator (B)

(b) Einspritzen der vereinigten Schmelzen s1) und s2) in eine heiße Form mit eingelegter textiler Struktur
(c) Auswerfen des resultierenden Formteils aus der Form.

**9.** Textile Struktur gemäß Anspruch 9 wobei die textile Struktur Gewebe, Gewirke, Gestricke, Gelege oder Vliese aus Glas-, Carbon- und/oder Aramid-Fasern sind.

**10.** Formteil erhältlich gemäß Ansprüche 8 oder 9.

Europäisches
Patentamt

European
Patent Office

Office européen
des brevets

**EUROPÄISCHER RECHERCHENBERICHT**

Nummer der Anmeldung

EP 11 18 1077

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 065 048 A2 (DEGUSSA [DE]) 3. Januar 2001 (2001-01-03) * Ansprüche; Beispiele * ----- | 1-10 | INV. C08G69/18 |
| X | EP 1 065 236 A2 (DEGUSSA [DE]) 3. Januar 2001 (2001-01-03) * Ansprüche; Beispiele * ----- | 1-10 | |

RECHERCHIERTE SACHGEBIETE (IPC)

C08G

Der vorliegende Recherchenbericht wurde für alle Patentansprüche erstellt

| Recherchenort | Abschlußdatum der Recherche | Prüfer |
|---|---|---|
| München | 13. Februar 2012 | West, Nuki |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
Dokument

EPO FORM 1503 03.82 (P04C03)

| Im Recherchenbericht angeführtes Patentdokument | Datum der Veröffentlichung | Mitglied(er) der Patentfamilie | | Datum der Veröffentlichung |
|---|---|---|---|---|
| EP 1065048 A2 | 03-01-2001 | AT | 272497 T | 15-08-2004 |
| | | BR | 0002904 A | 30-01-2001 |
| | | CA | 2312582 A1 | 29-12-2000 |
| | | CN | 1290601 A | 11-04-2001 |
| | | EP | 1065048 A2 | 03-01-2001 |
| | | ES | 2223343 T3 | 01-03-2005 |
| | | JP | 3860395 B2 | 20-12-2006 |
| | | JP | 2001071436 A | 21-03-2001 |
| | | KR | 20010049644 A | 15-06-2001 |
| | | US | 6355358 B1 | 12-03-2002 |
| EP 1065236 A2 | 03-01-2001 | AT | 250642 T | 15-10-2003 |
| | | AU | 4260000 A | 04-01-2001 |
| | | BR | 0002890 A | 31-10-2000 |
| | | CA | 2312457 A1 | 29-12-2000 |
| | | CZ | 20002415 A3 | 11-04-2001 |
| | | EP | 1065236 A2 | 03-01-2001 |
| | | ES | 2204396 T3 | 01-05-2004 |
| | | JP | 3404007 B2 | 06-05-2003 |
| | | JP | 2001019764 A | 23-01-2001 |
| | | KR | 20010049642 A | 15-06-2001 |
| | | US | 6391982 B1 | 21-05-2002 |

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9412560 A
- DE 19931720 A
- US 4144123 A
- EP 895521 A
- EP 25515 A
- EP 675914 A

**In der Beschreibung aufgeführte Nicht-Patentliteratur**

- **CHARLESBY, A.** *Nature,* 1953, vol. 171, 167
- **DEELEY, C.** *J. Appl. Phys.,* 1957, vol. 28, 1124-1130
- Polyamide, Kunststoffhandbuch. Karl Hanser Verlag, 1998